(19) Europäisches Patentamt
European Patent Office
Office européen des brevets

(11) **EP 4 725 299 A1**

(12) **EUROPEAN PATENT APPLICATION**

(43) Date of publication:
**15.04.2026 Bulletin 2026/16**

(21) Application number: **24205392.4**

(22) Date of filing: **08.10.2024**

(51) International Patent Classification (IPC):
**A01G 24/35** (2018.01)   **A01G 24/40** (2018.01)
**A01G 24/27** (2018.01)   **A01G 24/44** (2018.01)

(52) Cooperative Patent Classification (CPC):
**A01G 24/27; A01G 24/44**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **FibriTech sp. z o.o.
04-953 Warszawa (PL)**

(72) Inventors:
• **Bil, Monika**
  **01-493 Warsaw (PL)**
• **Borkowski, Tomasz**
  **02-758 Warsaw (PL)**
• **Kulachenko, Artem**
  **18760 Täby, Stockholm (SE)**
• **Ciamulski, Tomasz**
  **03-924 Warsaw (PL)**

(74) Representative: **Eisenführ Speiser
Patentanwälte Rechtsanwälte PartGmbB
Gollierstraße 4
80339 München (DE)**

(54) **WATER RETAINING SUBSTRATE**

(57)   Water retaining structure, preferably a water absorbent or a plant growth substrate, comprising a three-dimensional fibre network, the fibre network comprising cellulose and/or ligno-cellulose fibres, wherein the fibre network shows a hierarchical pore structure comprising macropores with a pore size > 500 $\mu$m, mesopores with a pore size in the range 20 to 500 $\mu$m, micropores with a pore size of 5 to 20 $\mu$m and Nanopores with a pore size < 5 $\mu$m.

**Fig. 4c**

EP 4 725 299 A1

**Description**

The invention relates to a water retaining structure, preferably a water absorbent or a plant growth substrate and a method for the preparation of a water retaining structure, especially a water absorbent or a plant growth substrate.

The ability to retain water in relatively high amounts is useful in a broad range of applications. For example, water retaining structures can be water absorbents, which are used to soak water in case of leakage or flooding.

Known water absorbent material like superabsorbent polymers are often inefficient to recycle and generate waste.

The ability to retain water is also key in substrates used as plant growth substrates, where water (or water solution) has to be retained in the structure to provide it to the growing plants gradually.

Key characteristics of modern horticulture include precision horticulture, vertical farming, hydroponics, aquaponics, protected cultivation (e.g. greenhouse production or other controlled environments). These practices are helping to ensure global food security, meet the growing demand for fresh year-round products, provide desired ornamental or functional plants, and minimize the environmental impact of agriculture. Soilless substrates are used in modern horticulture as plant growth substrate for several reasons: They allow for precise control of nutrients and moisture. They reduce the risk of pests and diseases. They are portable and easy to use. They are suitable for specific crops. They increase yield and quality of production.

In general, soilless substrates allow for a more controlled, precisely crafted environment for plant production. Peat currently dominates as a growing medium, but its environmental impact raises concerns. While the industry also utilizes coir and various mixtures, environmental pressures urge a shift away from peat. Peat bog excavation disrupts natural habitats, and the vast difference between formation timescales (10,000 years) and consumption rates (100 years) renders it a non-renewable resource. Sustainable alternatives are crucial for protecting ecosystems and ensuring long-term resource availability but lacking nowadays.

Most of the plant growth substrates used are either loose organic materials or consistent inorganic ones (e.g. plastic, mineral wool). While organic materials pose operational challenges due to their loose nature, inorganic options generate waste after use as their recycling is often inefficient.

The invention aims to provide an improved water retaining structure that is both high-performing and sustainable.

According to a first aspect the invention relates to a water retaining structure comprising a three-dimensional fibre network. The fibre network comprises cellulose and/or ligno-cellulose fibres, wherein the fibre network shows a hierarchical pore structure comprising macropores with a pore size > 500 $\mu$m, mesopores with a pore size in the range 20 to 500 $\mu$m, micropores with a pore size of 5 to 20 $\mu$m and nanopores with a pore size < 5 $\mu$m. The water retaining structure is preferably a water absorbent or a plant growth substrate.

The three-dimensional fibre network means, in this context, that at least parts of the fibres are bonded together to provide a self-sustainable structure. Thus, the water retaining structure comprises a three-dimensional fibre network of cellulose and/or lingo-cellulose fibres, which are at least partly bonded. In the hierarchical pore structure, the macropores and mesopores arise from interfibre connectivity, while the micropores are typical for fibre lumen and pits and the nanopores are intrinsic to walls of cellulose fibres.

The invention includes the recognition that this pore size distribution and 3D structure contribute to the material's excellent water absorption and retention properties. The smaller pores (micropores and nanopores) are responsible for water distribution due to larger capillary forces. The largest pores (macropores) are responsible for the content of air required in substrates. Mesopores retain water easily available for the plants and thus in particular helpful for plant growth substrates.

The invention includes the recognition that the fibre network with the hierarchical pore structure comprising macropores, mesopores, micropores and nanopores allows the water retaining structure to soak water rapidly when watered or in contact with water and then keep the water easily in the structure. Additionally, the invention is based on the recognition that a cellulose and/or ligno-cellulose network with such pore structure becomes pliable when wet but retains its shape and sufficient stiffness. Cellulose is a renewable material derived from plants. Thus, the invention provides, by the use of cellulose and/or ligno-cellulose, binderless thus biodegradable materials, which do not contain elements that would be phytotoxic. Regarding the water retaining structures used as plant growth substrate the invention is additionally based on the recognition that the hierarchical pore structure not only retains and provides water, but also air, which is required by roots and thus enables highly efficient and sustainable plant growth substrates.

To characterize the hierarchical pore structure by scanning electron microscopy (SEM), imaging at various magnifications is employed. The SEM analysis was performed using a Hitachi SU8200 microscope, operating at accelerating voltages of 5-10 kV and working distances of 8-23 mm, depending on the desired magnification and resolution. Samples were prepared by carefully sectioning the fibre network to expose the surface and internal structure. The samples were then mounted on aluminium stubs using carbon tape and sputter-coated with a thin layer of gold (approximately 10 nm) to improve conductivity and image quality. A series of images were acquired at magnifications ranging from 50x to 50,000x, covering length scales from millimetres to nanometres. This allows to visualize and assess the pore structure across four distinct size regimes:

Macropores (> 500 $\mu$m) and mesopores (20 - 500 $\mu$m): Images at magnifications of 50-200x reveal the interconnected network of fibres, with large voids between the fibres representing the macropores and mesopores.

Micropores (5 to 20 $\mu$m): At magnifications of 500-2,000x, the lumen and pits within the individual fibres were clearly visible.

Nanopores (< 5 $\mu$m): High-magnification images (10,000-50,000x) allow to observe the micropores within the cell walls of the cellulose fibres.

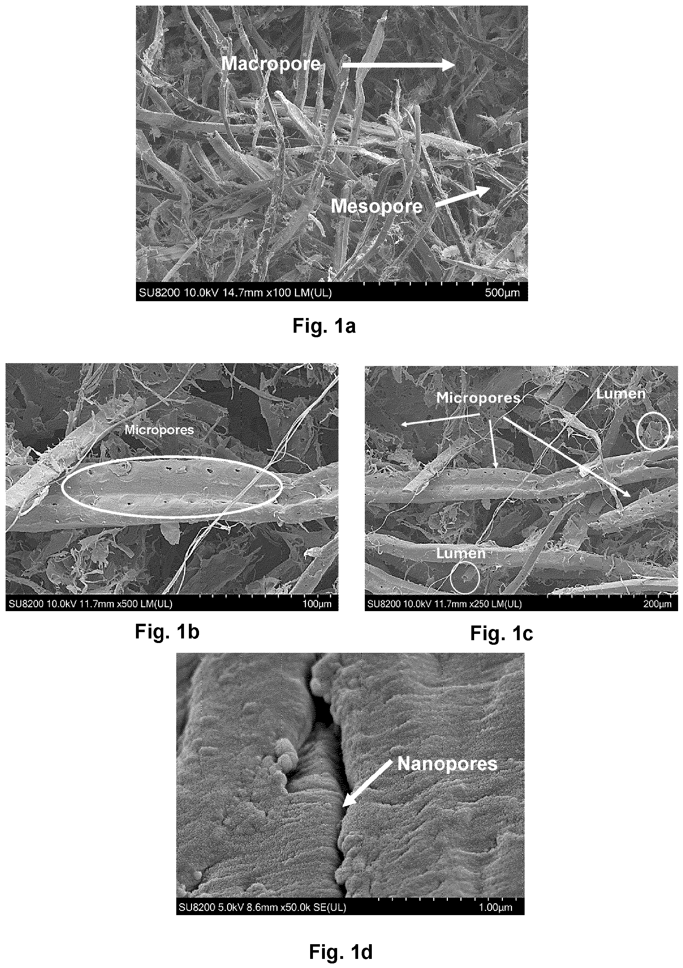

The porosity distribution is then estimated based on an assessment of the relative abundance and sizes of pores observed at each length scale. To ensure reproducibility and reliability, multiple samples are analysed, and the observations are consistent. The hierarchical pore structure of an example of an absorber is shown in Fig. 1a to 1d. Fig. 1a shows macropores and mesopores. Fig. 1b and 1c show micropores as pits and lumen. Fig. 1d shows nanopores in the cell walls.

In an embodiment the water retaining structure has an overall porosity in a range of 80 to 98 % and/or an average density in the range from 50 to 140 kg/m$^3$.

The porosity can be determined, for example, through three methods. One method is the density-based method: The porosity is estimated based on the measured bulk density of the material and an assumed density for the cellulose and/or lingo-cellulose fibres. The calculation is as follows:

Porosity = (1 - $\rho$_bulk / $\rho$_fibre) $\times$ 100% where: $\rho$_bulk = measured bulk density of the cellulose fibre network $\rho$_fibre = assumed density of the cellulose fibres 1500 kg/m$^3$.

For example, if the measured bulk density is 50 kg/m$^3$, and assuming a cellulose fibre density of 1500 kg/m$^3$, the estimated porosity is: Porosity = (1 - 50 / 1500) $\times$ 100% = 96.7%

Another method follows the European Standard EN 13041:2011 "Soil improvers and growing media - Determination of physical properties - Dry bulk density, air volume, water volume, shrinkage value, and total pore space", which provides a standardized method for directly measuring the total pore space (porosity) of horticultural materials. This method is based on the assumptions of densities of organic and inorganic compounds.

The key steps in this method are:

a. The dry bulk density of the material is determined by weighing a known volume of the dry sample.

b. The sample is then saturated with water, and the water volume is measured after allowing excess water to drain under standardized conditions. This measured water represents the water-holding capacity.

c. The air volume is calculated by subtracting the water volume from the total volume of the sample.

d. The shrinkage value is determined by measuring the saturated sample's volume change after drying.

The total pore space (porosity) is then calculated as:

Porosity = (1 - Dry Bulk Density / Estimated Particle Density) × 100%

The particle density is estimated based on the assumption that organic matter has a density of 1.55 g/cm$^3$ and mineral matter has a density of 2.65 g/cm$^3$. The overall particle density is calculated as a weighted average based on the organic matter and mineral content. Mineral content is the inorganic residue remaining after the organic matter in a sample has been burned off and the organic matter content is determined through loss on ignition at 450 $\pm$ 25°C.

This method confirms the porosity range of 80-98% for the tested water containing structure, consistent with estimation method described earlier.

The third method to determining the hierarchical pore structure is characterizing the water retaining structure using table-top X-ray microtomography with a resolution of 5 micrometres, and analysing using Thermo Scientific Avizo Software, which employs a Pore Network Model for advanced porosity analysis. The Pore Network Model allows for rapid understanding and exploration of the pore space, featuring spheres or ellipsoids-and-sticks type visualization with property mapping. This model enables to quantify various porosity properties and statistics, including volume fraction, pore size distribution, pore throat size distribution, pore orientation, and shape factor. To illustrate the water retaining structure according to the invention three example samples with varied densities were analysed. The analysis reveals the following characteristics:

| Sample ID | Total Porosity | Average pore size |
|---|---|---|
| Sample 1 | 64% | 512$\mu$m |
| Sample 2 | 68% | 640$\mu$m |
| Sample 3 | 74% | 860$\mu$m |

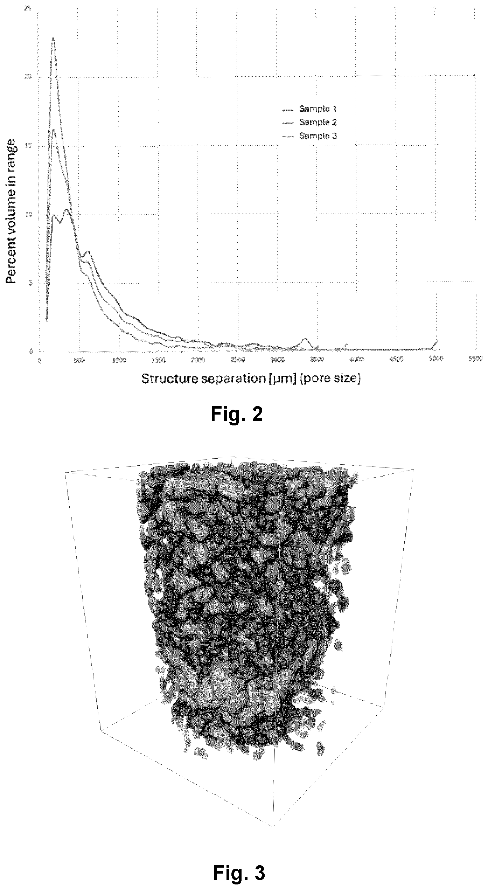

The pore size distribution, as shown in Fig. 2, reveals a complex hierarchical structure which correlates with average density of the samples. It is important to note that due to the 5-micrometer resolution of the tomography scan, some nano- and micropores were not captured in this analysis but were confirmed through SEM imaging (Figure 1b to 1d).

Fig. 3 provides a visual representation of the complex 3D pore network within our material, as generated by the Pore Network Model.

Total porosity measured with this methodology ranges from 64% to 74% in preferred embodiments of the claimed water retaining structure, which is also shown in the three given of Fig. 2. However, it is crucial to note that this result depends on the methodology used. As mentioned earlier, when measured according to the European Standard EN 13041:2011, the real porosity is over 90% for samples 1 to 3 and in general between 80 and 98%.

In preferred embodiments the average pore size is between 512 $\mu$m and 860 $\mu$m. In a further embodiment the water retaining structure has a water holding capacity WHC in the range from 40 to 95 %v/v, wherein the water holding capacity is the percentage of total volume occupied by water after watering fully and excess water has been drained from the substrate.

The water holding capacity WHC is measured as follows:

1. Measure dry mass and volume of the water retaining structure.
2. Immerse the water retaining structure up to half its height. (For substrates that does not soak up water rapidly, full immersion is applied).
3. Keep it immersed for 2 hours. (For some substrates that change WHC over time, longer immersion is required).
4. Take the water retaining structure out and put on a mesh to let excess water escape for 0.5 hour.
5. Measure wet mass and calculate volume of the water that is kept in the water retaining structure. The measurement is done after drainage under standard atmospheric conditions (23°C, 1 atm, RH 50%).

The hierarchical pore structure allows for such relatively high water holding capacities while the structural integrity of the water retaining structure is maintained also in a wet stage.

In one embodiment, the three-dimensional fibre network has a rigid structure. Herein, preferably, parts of the cellulose fibres are bonded together via hydrogen bonding and/or Van-der-Waals bonding. The three-dimensional fibre network is preferably dimensionally stable after water absorption.

It is preferred if the structure exhibits a water absorption rate of at least 5 g water/g dry material/min in the first minute of contact with water and/or maintains at least 80% of its dry volume when saturated. Thus, the water retaining structure is able to absorb water relatively fast and may additionally be of good dimensional stability when saturated.

In an embodiment the water holding capacity (WHC) of the water retaining structure increases over time when exposed to water, wherein an initial water holding capacity, measured immediately after saturation, is in the range of 20-70% v/v, a final stable water holding capacity, measured after 24 hours of continuous exposure to water, is in the range of 40-95% v/v and wherein a ratio of final stable water holding capacity to initial water holding capacity is between 1.1 and 3.0. It is thereby preferred, when the water retaining structure reaches at least 90% of its final stable water holding capacity within a period of 2 to 12 hours. It is further preferred if a rate of water holding capacity increase follows a logarithmic curve, with the rate of increase being highest in the first hour of water exposure and gradually decreasing thereafter.

Preferably the cellulose and/or ligno-cellulose fibres are bonded together via hydrogen bonding and/or Van der Waals interactions, thereby providing dimensional stability to the three-dimensional fibre network also in the wet stage. Alternatively, the three-dimensional fibre network is present in the form of fluff, and preferably, parts of the cellulose and/or ligno-cellulose fibres are physically entangled and/or bonded via weak bonding via preferably van der Waals forces and/or Coulomb interactions. In all forms, the three-dimensional fibre network is based on the use of long and yet bulky fibres, which, in the embodiment of fluff, create the three-dimensional structure merely through entanglement and mechanical interlocking, for example, due to the presence of primary fines (fibre fines are generated during the pulping). This provides stability and a reservoir for the water in the hierarchical pore structure. This embodiment achieves lower densities and much less dust than loose fibre fluff. Preferably, the cellulose and/or ligno-cellulose fibres are physically entangled and/or weakly bonded via van der Waals forces and/or Coulomb interactions allowing for flexibility of the three-dimensional fibre network.

In an embodiment the water retaining structure further comprises at least one wet-strength additive preferably in a range of 0.1 to 5% by weight of the dry fibre mass. The at least one wet-strength additive is in particular a glyoxal-based additive, carboxymethyl cellulose (CMC), nanocellulose (NC) or a polyelectrolyte, in particular a cationic starch, dialdehyde starch (DAS), a cationic biopolymer, polyacrylamide (PAM), polyvinylamine (PVAm). The use of wet-strength agents further improves the mechanical stability of the structure in the wet stage.

The water retaining structure can have a gradient of density from a first area to a second area, wherein the density is higher in the second area than in the first area, wherein the density in the first area is preferably between 30 and 80 kg/m$^3$ and between 80 and 200 kg/m$^3$ in the second area. In particular, the first area can be an inner area while the second area is positioned nearer to a surface of the water retaining structure. Alternatively or additionally the first area can be arranged on one side of the water retaining structure and the second area on an opposite side of the water retaining structure. A density gradient is especially advantageous for plant growth substrates, where higher porosity can allow more space for rooting while higher density gives more stability. But also, for other water retaining structures such as for example water absorbent higher density in some areas to enhance stability, for example near the surface can be advantageous.

In an alternative embodiment the water retaining structure has an essentially constant density across its span. In such embodiment the water is preferably equally distributed throughout the structure in a wet stage.

In a further embodiment the water retaining structure additionally comprises a fabric, wherein the fabric preferably surrounds the fibre network and/or is arranged within the fibre network. The fabric is preferably a natural fabric. The fabric can serve as a cover or as a reinforcement for the fibre network. Preferably, at least one fabric is already used as a mould in the production process of the water retaining structure.

In an embodiment, the water retaining structure, in particular the water absorbent, has the form of a mat, preferably a mat with at least one fabric surrounding the fibre network. Mats are commonly used in industrial settings, particularly for covering larger areas prone to water spills or leaks. Mats offer a high surface area to volume ratio, enabling rapid and extensive water absorption. They can be easily laid out to cover and contain spills on floors or other flat surfaces. Mats are flexible and can be cut or folded to fit around equipment or conform to irregular spaces. Their flat profile allows for compact storage and easy transportation. Mats can also be used as a preventive measure.

In a further embodiment the water retaining structure, in particular the water absorbent, can have the form of a sleeve, a vessel or a boom. In these forms, the fibre network is encased in an elongated tubular sleeve, typically made from a permeable fabric or mesh. Booms can be connected end-to-end to create a longer barrier for containing larger spills. They are also suitable for confinements where spills occur repeatedly, acting as an absorbing media for prolonged periods without frequent replacements. The vessel-like design of the sleeves or booms provides a high capacity for water retention, allowing them to absorb and hold significant volumes of water before reaching saturation. This feature is particularly advantageous when continuous water leakage is expected, such as around faulty machinery or in high-risk areas.

In a further embodiment, the fibre network can be provided in fluff forms or processed into small granules or chips. Thus, the water retaining structure can be present in form of granules or chip. These versatile forms can be easily dispensed and spread over affected areas, conforming to surface shapes and contours. They are particularly useful for treating spills in hard-to-reach spaces, such as crevices, corners, or around complex machinery. The high surface area of fluff and the small particle size of granules enable rapid and thorough water absorption from various surfaces, including hard floors, soil, or gravel. These forms can also be used as plant growth substrate alone or in mixtures within plant containers or the like.

In a preferred embodiment, the water retaining structure is present in a compressed state, having a density that is 1.5 to 10 times higher than the density of the uncompressed state. Such embodiment is easier to store and transport.

The density ranges mentioned in the claims, unless otherwise specified, refer to the uncompressed state of the water retaining structure. The substrate may be pre-compressed when dry for storage and transportation, leading to a higher density in the compressed state. However, upon wetting, the substrate regains its original shape and structure, reverting to the dry density ranges close to specified for the uncompressed state.

In a preferred embodiment, the water retaining structure is a plant growth substrate. According to a further aspect the invention includes the recognition that the water retaining structure soaks water rapidly when watered or in contact with water and then keeps it easily and that additionally air is also present in the structure, which makes the water retaining structure an excellent candidate for soilless growing media for modern horticulture. In the wet stage the water retaining structure becomes pliable but retains its shape and sufficient stiffness. There are numerous advantages of the plant growth substrate as compared to the existing solutions: The plant growth substrate is able to maintain its shape, holes (for seed or cutting) do not crumble. Use of the plant substrate is clean, eliminating the need for a large bale chopper, mixer with irrigation, and potter machines, reducing energy consumption. Pots can be eliminated. The plant growth substrate does not contain pathogens or pests, unlike peat, which is often contaminated with e.g. sciara militaris or root diseases. The invention furthermore includes the recognition that such plant growth substrates integrate seamlessly with current cultivation processes. Furthermore, the plant growth substrate needs fewer operations and no heavy lifting and allows for easy planting or transplanting, overall leading to greater efficiency. Due to the relatively high water holding capacity less frequent irrigation is required and a larger water buffer in case of malfunction or anomaly can be provided. As the plant growth substrate based on the hierarchical pore structure soaks up water very quickly, it allows for faster preparation of the substrate for use. Additionally the plant growth substrate does not contain peat, aligning with ecological and market trends and is biodegradable. Worn-out substrates can be composted, transforming them into a sustainable resource instead of waste.

The plant growth substrate can be used as a growing medium in various cultivation and plant production scenarios. For example: cuttings (vegetative propagation), seedlings (from seed), microgreens, herbs, leafy greens, multi-stage systems (e.g. for fruity vegetables), self-supporting pots. It can be applied in propagation, rooting, seedlings, hydroponics, aquaponics, aeroponics, vertical farming, green houses or other controlled environment cultivations. The plant growth substrate is also suitable for all water provision systems, e.g.: sprinklers, dripping system, NFT (nutrient film technique), ebb and flow, DWC (deep water culture).

In a preferred embodiment the plant growth substrate has at least one rooting area with a lower density than at least one mechanically stabilizing area, wherein preferably at least the rooting area has a density in the range from 30 to 80 $kg/m^3$ and the at least one mechanically stabilizing area has a density in the range from 80 to 200 $kg/m^3$. It is preferred when the mechanically stabilizing area is located at an outer shell of the plant growth substrate and/or wherein preferably at least one of the at least one rooting area is arranged either below or above at least one of the at least one mechanically stabilizing area of the plant growth substrate, when the plant growth substrate is used.

Top or above is used herein in the meaning that in use case being opposite to gravitational force direction - typically facing the sun or a light source and bottom is meant to being aligned with gravitational force direction - typically facing a base. In other words: top is the side of the plant growth substrate, where a stem of the plant in use case leaves the substrate, bottom is the opposite side.

Arranging at least one rooting area with lower density and at least one mechanically stabilizing area allows for plant growth substrates designed to facilitate root branching penetration and development and to ensure an optimal balance between water retention and air content within the substrate and to provide physical strength and durability of the substrate at the same time.

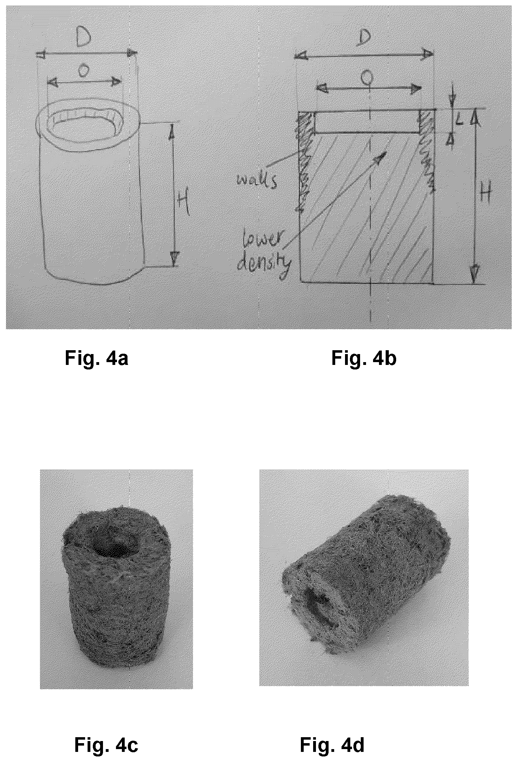

For example, a cylindrical plug for plants started from seeds, as a plant growth substrate, can have a lower density on top where seed is placed, denser sidewalls at a top half to make it stiffer and manipulable as well as more fragile sidewalls at bottom half, where roots penetration is expected in later growth stage. Schematic drawings of such plant growth substrates are shown in Fig. 4a and Fig. 4b, wherein Fig. 4b is a section view of Fig. 4a. As marked, there is a lower density in the middle and at the walls of the bottom half. In Fig. 4c and 4d examples of such plant growth substrates are shown.

Another example, a cuboid for young fruity plants, into which plug with rooted seedling is transplanted, can have a lower density at the bottom where roots develop out of the plug, thick and strong sidewalls and top face for physical robustness and to prevent rooting outside as well fragile bottom face to allow rooting through to a next stage substrate below.

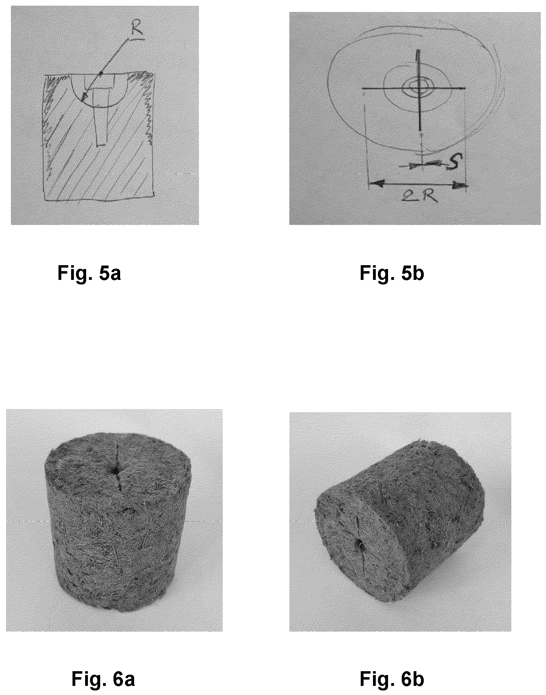

Another example, plugs for cuttings, preferably equipped with a hole for a stem to be inserted, can have a lower density at a bottom halve as roots develop starting from the tip of the stem inserted to the centre of the plug and denser sidewalls at a top half to make it stiffer and easier to manipulable as well as more fragile sidewalls at bottom half. Preferably substrates for cuttings are equipped with a hole. To make the process of stem insertion easier and safer for the plant a cross shaped cut (see example schematic drawing in Fig. 5a and b. This cut allows for material movement during insertion, allowing for hole opening under pressure and closing when pressure is released - e.g. by squeezing the plug from the sides the hole is opened wide.

In an embodiment the plant growth substrate has an intricate network of interconnected channels and pathways that are conducive to root growth and development. It is preferred if the fibre orientation and density of the three-dimensional fibre network are controlled to create channels and pathways that facilitate root penetration and development and to ensure an optimal balance between water retention and air content within the substrate and to provide physical strength and durability of the substrate.

These channels and pathways are detectable and traceable through high-resolution x-ray imaging techniques, such as micro-computed tomography (micro-CT), with a spatial resolution ranging from 0.5 to 5 micrometres.

In an embodiment the density of the plant growth substrate increases from a minimum density at the at least one rooting area up to 400% of the minimum at the at least one mechanically stabilizing area as measured by a standardised method such as ASTM D3575 or ISO 845.

In a preferred embodiment of the plant growth substrate at least parts of the surface of the fibre network are coated with at least one hydrophobic agent. The at least one hydrophobic agent is in particular a wax, preferably a natural wax, a plant-based oil and/or a bio-based, non-phytotoxic, hydrophobic biopolymer. In particular this embodiment exhibits a unique water-holding capacity due to the combination of the modified surface properties and the varying pore sizes within the fibrous structure. The coating preferably inter alia alters the contact angle between the fibres and water. The coating on the fibres makes them more hydrophobic, causing water to preferentially fill the smaller pores while leaving the larger pores unfilled. This selective filling of pores enhances the coexistence of both water and air within the substrate, creating an optimal balance for plant growth. The air-filled pores provide oxygen to the roots, while the water-filled pores ensure an adequate supply of moisture.

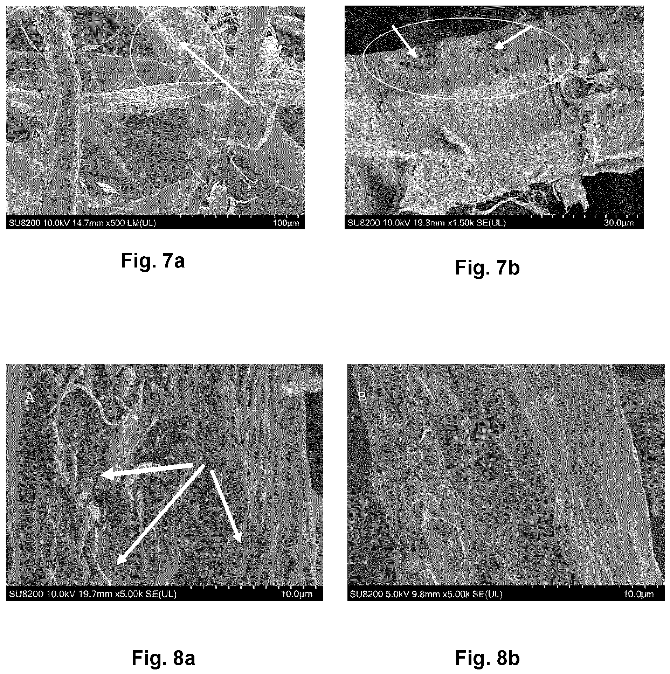

Fig. 7a and 7b show SEM pictures of examples of plant growth substrates showing micropores (partly) covered with hydrophobic coating. Fig. 8a shows also a coated fibre with hydrophobic coating (indicated with arrows) in contrast to the uncoated fibre in Fig. 8b.

Preferably the coating with the at least one hydrophobic agent has a thickness of 0.1 to 5 μm, and the coated surface exhibits a water contact angle between 90° and 150.

By controlling the degree of hydrophobicity additionally through the choice and application of the coating material, the water-holding capacity of the substrate can be tailored to suit specific plant requirements. This adaptability allows for the creation of customized growing media that cater to the needs of different plant species or cultivation conditions. The water holding capacity is in these embodiments of plant growth substrate preferably in the range of 40 to 80 %.

Preferably, the natural wax comprises at least one of carnauba wax, candelilla wax or beeswax, and/or the plant-based oil comprises at least one of coconut oil, castor oil or soybean oil and/or the bio-based, non-phytotoxic, hydrophobic biopolymer comprises at least one of polylactic acid (PLA), a polyhydroxyalkanoate (PHA), or a starch-based polymer.

It is further preferred if the plant growth substrate further comprises decomposed organic matter, preferably humus and/or vermicompost, in particular wherein the plant growth substrate comprises decomposed organic matter in a range of 10 to 45 % of dry mass.

In a further aspect the invention is based on the additional recognition that adding significant amount of decomposed organic matter as humus orvermicompost improves cellulosic substrate biological stability a lot, because especially humus or vermicompost is known to be biologically stable itself. Thus, in some embodiments the cellulose or ligno-cellulose fibres create a porous skeleton, responsible for structure and shape, with amorphous humus particles trapped in-between. This way, a previously mainly cellulosic substrate is transformed into complex mixture that is not so easy to be dominated by one microbial invader. The addition of humus (among others decomposed organic matter) not only adds elements supporting plants growth, but also makes the composite of cellulose fibres plus compost biologically stable as opposed to pure cellulose fibres that could be prone to e.g. fungi invasion.

Decomposed organic matter, especially humus acquired in composting process is routinely used as a soil improver. Decomposed organic matter, especially humus is known for many advantages in terms of plant cultivation: it is source of nutrients available for plants; it positively functions hormonally in plants physiology; it has a high cation exchange capacity (CEC) that helps to stock the nutrients and reduce the fertilization; it has low carbon to nitrogen ratio (C:N ratio) and therefore improves C:N balance when added to cellulose fibres; humus helps to supress plants diseases; it increases capability to hold moisture; and it promotes healthy microbial.

Thus, the plant growth substrates based on mixture of cellulose and/or ligno-cellulose fibres and decomposed organic matter are primarily suitable as biodegradable soilless growing substrates for following scenarios: long-term cultivation (where biological stability becomes crucial); seedlings cultivation (especially when seedling is transplanted to soil) and microgreens and other short-term cultivations (where nutrient content can be an advantage). However, due to the diverse nature of plant cultivation practices, the suitability of nutrient content can vary, and users should arrange it based on the optimal performance in their specific applications.

In an embodiment the plant growth substrate further comprises at least one of fertilizer or fertilizer in encapsulated form or substrate improver, further preferred at least one of encapsulated mineral fertilizer or humic substances (including humic acid, fulvic acid, humin and hymatomelanic acid) or compost or zeolite or biochar or leonardite.

Such additives embedded in plant growth substrate preferably change physio-chemical properties like pH or CEC (cation-exchange capacity). Example of additives that increase CEC are compost or zeolite or biochar or leonardite.

In some embodiment the plant growth substrate shows a prefabricated hole in the centre of a cross-cut. In case of rooting the cutting (vegetative propagation through rooting part of maternal plant) stem of the plant have to be placed into substrate. To make the process of stem insertion easier and safer for the plant, the plant growth substrate has a cross shaped cut (shown in Fig. 6a and 6b). This cut allows for material movement during insertion allowing for hole opening under pressure and closing when pressure is released - e.g. by squeezing the plug from the sides the hole is opened wide.

In other embodiments the plant growth substrate is in form of granules or chips. Those forms allow for mixing while retaining local structure.

As a natural polysaccharide are biodegradable and does not persist in the environment, making it an eco-friendly choice for enhancing the wet strength of the substrate.

According to a second aspect the invention relates to a method for the preparation of a water retaining structure, especially a water absorbent or a plant growth substrate, comprising a three-dimensional fibre network, the method comprising the following steps:

a. foaming cellulose and/or ligno-cellulose fibres having a length to diameter aspect ratio of 50 to 200 in an aqueous solution to obtain a foamed aqueous solution;

b. providing the foamed aqueous solution obtained in step a) into a mould in an oven;

c. forming a three-dimensional fibre network product by providing electromagnetic energy to the foamed aqueous solution obtained in step a), wherein the electromagnetic energy is preferably applied with a power density of 1 to 25 kW/kg, more preferred 3 to 10 kW/kg for 2 to 30 minutes.

The invention is further based on the recognition that the desired favourable properties of the fibre network, which results in the good performance of the water retaining structure can be achieved especially via the described method. Especially the use of cellulose and/or ligno-cellulose fibres having a length to diameter aspect ratio of 50 to 200 with subsequent foaming and forming with electromagnetic energy allows to acquire the hierarchical pore structure enabling the enhanced water retaining capacity. The application of electromagnetic energy creates favourable internal pressures during moisture removal to bring fibres into closer contact and maximize fibre-fibre interfaces throughout the 3D structure. The described method further allows to fine-tune the porosity distribution to leverage the properties for a desired application.

Preferably, the mould is a closed mould that completely encloses the substrate mixture, or the mould is an open mould with one or more open sides. Especially in case of a closed mould but also for open moulds it is preferred if the mould is at least partly porous to allow water and steam to evaporate through the pores of the mould when the electromagnetic energy is applied. Preferably the mould comprises a plurality of pores each having a pore size of 0.3 to 2 mm. This range allows the fibres to remain within the mould and not to leak, while at the same time the pores are large enough to avoid substantial clogging of the pores. The pores of the mould are small enough that evaporated liquid within the mould results in a pressure build-up within the mould by the application of the electromagnetic energy. The aqueous solution is preferentially heated within the mould until steam is formed, which causes pressure build-up. The liquid and steam evacuate through the pores of the mould, thereby shaping the cellulose fibres into their three-dimensional fibre network and drying the solution. Mould permeability is preferably selected to allow drainage under volumetric steam pressure while maintaining the pressure to ensure efficient bonding. The size and distribution of these pores in the mould are factors in controlling the drainage rate and the resulting density of the substrate. Smaller holes or no holes restrict drainage, leading to a more open and porous structure of the water retaining structure, while larger holes allow for faster drainage and a denser region of the water retaining structure since the fibres follow the water during drainage.

While also other shapes of pores are feasible, it has been shown that the optimum shape of the pores is round.

In an embodiment softwood kraft pulp fibres, such as those derived from pine or spruce, are used as cellulose fibres. Those fibres especially exhibit the preferred length to diameter aspect ratio.

In an embodiment, the cellulose and/or ligno-cellulose fibres used in the water retaining structure comprise one or more of the following: softwood pulp fibres, such as those derived from pine or spruce (kraft or CTMP), coir fibres derived from coconut husks; hardwood kraft pulp fibres; mechanically processed wood fibres (wood wool, TMP or groundwood), agricultural residue fibres such as those from wheat straw, rice straw, or bagasse, bast fibres such as flax, hemp, or jute or combinations thereof.

These fibres especially exhibit the preferred length to diameter aspect ratio of 50 to 200. The specific combination and proportion of fibre types is preferably adjusted to optimize the water retention properties, porosity, and mechanical stability of the structure.

In a preferred embodiment, the cellulose and/or ligno-cellulose fibres comprise 70-100% by weight of softwood pulp fibres and up to 30% by weight of coir fibres, which provides an optimal balance of water retention capacity and structural integrity.

It is preferred if the foamed aqueous solution is in step a) mixed with a velocity in the range of 500 to 2000 rpm for 5 to 20 minutes and/or at a foaming temperature between 20 and 60°C.

In a preferred embodiment the foamed aqueous solution is subjected to a pressure in the range of 0.001 to 10 MPa during being placed into the mould. The application of pressure during placing the aqueous solution into the mould enables to remove excess liquid from the foam and achieve the desired density and structure of the water retaining structure.

Thus, the foamed mixture of ingredients is preferably compressed while packing to the mould. This compression results in final density gradient along direction of compression with higher density created from moving piston side. This phenomenon is utilized in a way to have lower density where the young plant roots start. Depending on the scenario, it means lower density on top when starting from seeds or lower density at the bottom in case of cuttings.

In one embodiment, foaming cellulose and/or ligno-cellulose fibres in an aqueous solution is performed by introducing a gas into the pulp. The size and homogeneity of the foam bubbles are influenced by the different phases of the forming process. The stage of preparing the batch of material gives the possibility of shaping the character of the foam by adding some additives to the mass: blowing agents increase the amount of gas filling the bubbles, and surfactants control the foam's susceptibility to foaming. The appropriate selection of foam stabilizers allows the foam to maintain the desired properties until the fibres stiffen and take over the role of a supporting skeleton a structure that has so far been held by vanishing bubbles. In one embodiment, an aqueous solution used for foaming cellulose fibres comprises at least one biodegradable non-fibrous additive comprising a foam stabilizer, foaming agent, biodegradable blowing agent or combination thereof.

Biodegradable foam stabilizers in the form of polysaccharides can be used with the method of the present invention. In particular, xantan or guar gum and/or agar are preferable biodegradable foam stabilizers. The main goal of foam stabilizers is to extend the life of wet foam and to support the mechanical stability of the final product. Biodegradable foaming agents meeting environmental standards can be used with the method of the present invention. In particular, coco glucoside and Sodium laureth sulfate are preferred foaming agents.

Biodegradable blowing agents introduced into the water solution can also be used as an aid in the formation of foam. The preferred blowing agents are sodium carbonate and sodium bicarbonate, which have minimal impact on the environment. In another embodiment, an aqueous solution used for foaming cellulose fibres further comprises at least one further additive for controlling biomechanical properties of the obtained fibre network product, wherein said further additive comprises a polysaccharide, polysaccharide derivative, lignin, lignin derivative, cellulose, and a cellulose derivative. Other non-fibrous additives can be used with the method of the present invention to define the end parameters of the material. Some of the additives have a double role: they are material stabilizers and foam enhancers. Preferably, biomaterials that are at least partially dissolvable in water are used. Preferred non-fibrous additives are polysaccharides that help with moisture control and stiffness of the product. Agar gel for example acts as a foam stabilizer that extends the life of wet foam, and after electromagnetic forming, it acts as a glueing agent, improving the strength of bonds between fibres.

Biodegradable foam stabilizers (e.g., xanthan gum, agar gum, Arbocell, Polyquaternium-10), foaming agents (coco glucoside), and blowing agents (sodium carbonate, sodium bicarbonate) are preferred for the production of rigid structures that originate from foam. These additives help create and stabilize the foam, which is beneficial for achieving the desired porous structure in the rigid form.

In a further embodiment in step c) a first form of electromagnetic radiation and at least a second form of electromagnetic radiation different from the first form of electromagnetic radiation are applied subsequently to the same cellulose and/or ligno-cellulose fibres.

It is further preferred if the first form of electromagnetic radiation is microwave electromagnetic radiation and the second form of electromagnetic radiation is a radio frequency (RF) alternating electromagnetic field. This combination allows especially for maximum efficiency and productivity during the final phase of drying, when the water must be removed from the fibres. The structure is merely formed when the first form is applied and stays practically intact through RF drying with only some degree of shrinkage. The combination of microwave and radio frequency allows further preserving the pore structure control by manipulating electromagnetic field patterns and heating uniformity.

It is thereby preferred if the first form of electromagnetic radiation is configured to warm up the material and force part of water out to go into the drain, and if the second form of electromagnetic radiation is configured to obtain substantially uniform fibrous bonded structures by drying fully down to preferably 0% moisture content. It is further preferred if the second form of electromagnetic radiation is applied until the material is dried down to a moisture content in the range from 0 to 30% and/or if the first form of electromagnetic radiation is applied not longer than until a local temperature of at least some part of the material exceeds a predefined threshold.

In an embodiment, before the foaming in step a) decomposed organic matter and/or at least one additive and/or at least one surfactant is added to the aqueous solution, in particular wherein the at least one additive is a wet strength additive and/or a fertilizer like compost, zeolite or biocarbon or encapsulated one and wherein the at least one surfactant is preferably an amphoteric surfactant, such as Coconut Betaine and/or cocamidopropyl betaine. Anionic surfactants like Sodium Lauryl Ether Sulfate (SLES) or Sodium Dodecyl Sulfate (SDS) can also be used. The at least one surfactant is preferably added in a dose of 0.1 to 2 wt%.

Preferred wet strength additives are cationic starch or other cationic biopolymers, glyoxal-based additives, polyacrylamide (PAM), carboxymethyl cellulose (CMC), polyvinylamine (PVAm), nanocellulose (NC) or dialdehyde starch (DAS).

Additives are preferably mixed together with other ingredients before foaming. If the additive contains water, this is preferably compensated in the overall recipe. Some additives that dissociate can worse or disable foaming property. In such cases foaming agents (e.g. surfactants) has to be added or foaming agent content has to be increased.

Surfactants play a pivotal role in modifying water surface tension, which can be important for the foaming process in producing cellulose fibre-based 3D matrices. While surfactants are helpful for creating the desired foam structure, their interaction with plant roots must be carefully managed to ensure positive outcomes in cases of preparation of plant growth substrates. Sodium Lauryl Ether Sulfate (SLES) and Sodium Dodecyl Sulfate (SDS), Coconut Betaine or SLS (Sodium Lauroyl Sarcosinate) are examples of surfactants that have shown compatibility with plant systems. These surfactants are selected through meticulous growth testing for their biocompatibility and lower phytotoxicity compared to other surfactants. Their effectiveness can be attributed to their ability to reduce surface tension without adversely affecting the plant's uptake mechanisms due to their rapid primary degradation with minimal accumulation.

In an embodiment the mould comprises a plurality of pores, each having a pore size of 0.3 to 2 mm and/or the pores have funnel shape having wider opening toward outside of the mould and/or the mould has a total opening area in the range of 1 to 50%. The total opening area of the mould, determined by the number and size of the pores in the mould, is another beneficial parameter. Moulds with a larger opening area promote faster drainage and a denser structure, as the fibres are pulled towards the holes during moulding. Conversely, moulds with a smaller opening area result in slower drainage and a more open, porous structure.

In a further embodiment the mould comprises a material transparent for electromagnetic radiation, preferably cotton, jute or polypropylene and/or the mould comprises at least one fabric, the at least one fabric being preferably a nonwoven fabric, more preferred comprising polypropylene (PP), polyhydroxyalkanoates or natural fibres. These materials are chosen for their ability to withstand the processing conditions and their transparency to the applied EM energy, ensuring efficient and uniform heating of the foamed aqueous solution. In an embodiment, the mould is made of dielectric material, having a softening point above 100°C. The mould can be 3D printed or machined using polypropylene (PP) or other materials compatible with electromagnetic (EM) energy.

It is further preferred if the at least one fabric is not removed after step c). Thus, the fabric can also be used to surround the final fibre network and shape the water retaining structure. This is especially helpful if the fibre network is in fluff form.

In an embodiment of the method the foam is packed unidirectionally into the mould, such as from one end of the mould to the other. The direction in which the foamed aqueous solution is packed into the mould also plays a role in determining the density and fibre orientation of the substrate. Packing the foam unidirectionally, such as from one end of the mould to the other, can result in a more aligned fibre orientation and a density gradient along the packing direction. This is because the fibres tend to align themselves in the flow direction and along the walls during the packing process, and the drainage rate may vary along the mould length.

Preferably, a surface share of the pores of the mould with regard to the surface encapsulating the volume within the mould is small such that internal pressure can build up, whereas for an internal mould volume of up to 1 litre, the surface share of the pores is between 4% and 12%.

It is further preferred if for a volume is between 1 litre and 10 litres, the surface share of the pores is between 0.5% and 40%, preferably between 2% and 20% and most preferably between 6% and 14%, and for a volume between 10 litres and 100 litres the surface share of the pores is between 1% and 60%, preferably between 4% and 40% and most preferably between 10% and 30%.

In an embodiment, a share of a total pore area in relation to an internal mould volume is between 0.05 and 0.15 $cm^{-1}$, preferably is between 0.05 and 0.1 $cm^{-1}$, most preferably is 0.1 $cm^{-1}$.

In an advantageous embodiment the method comprising at least one hydrophobization step, preferably before step a), after which at least parts of the surface of the fibres of the fibre network are hydrophobic, wherein at least one hydrophobization step comprises preferably coating at least partially coating a surface of the fibre network with at least one hydrophobic agent. The hydrophobic agent is preferably added in a range of 1 - 10 % by weight of the dry fibre mass, wherein the hydrophobic agent is preferably a wax, more preferred a natural wax, a plant-based oil and/or a bio-based, non-phytotoxic, hydrophobic biopolymer.

The step of coating can comprise for example immersion, spraying or vapour deposition of the coating. Immersion means dipping the cellulose fibres in a solution containing the coating material. Spraying comprises applying the coating material onto the fibres using a spraying system. During vapour deposition the fibres are exposed to a vapour of the coating material, which condenses and forms a thin film on the fibre surface.

In an embodiment the method further comprises a compressing step after step c) to produce a compressed water retaining structure.

According to a third aspect the invention relates to a water retaining structure, especially water absorber or plant growth substrate, produced according to the method according to the second aspect of the invention.

Examples are described in more detail below with reference to the appended drawings.

Fig. 9 is a schematic drawing of a method according to an example of the second aspect of the invention.

Fig. 10a to 10d show an example of a water retaining structure, here a plant growth substrate according to the first aspect of the invention before and after water soaking.

Fig. 11a to 11f show an example of a water retaining structure according to the first aspect of the invention before and after 1 min and after 24 h of water soaking.

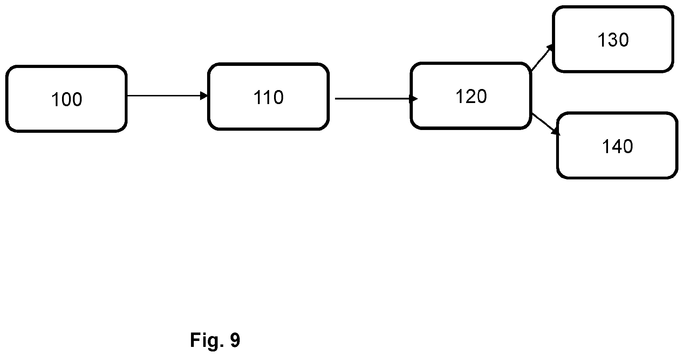

Fig. 9 is a schematic drawing of a method according to an example of the second aspect of the invention. The method for the preparation of a water retaining structure, especially a water absorbent or a plant growth substrate, comprising a three-dimensional fibre network, comprises in a first step 100 foaming cellulose and/or ligno-cellulose fibres having a length to diameter aspect ratio of 50 to 200 in an aqueous solution to obtain a foamed aqueous solution. In step 110 the foamed aqueous solution obtained in step 100 is provided into a mould in an oven. In step 120 a three-dimensional fibre network product is formed by providing electromagnetic energy to the foamed aqueous solution obtained in step 100, wherein the electromagnetic energy is preferably applied with a power density of 1 to 25 kW/kg, more preferred 3 to 10 kW/kg for 2 to 30 minutes. In a preferred embodiment in the third step 120 a first type electromagnetic energy and a second type electromagnetic energy different from the first type electromagnetic energy are applied subsequently to the same cellulose/lignocellulose fibres, wherein the first type of electromagnetic energy is radio wave or microwave electromagnetic radiation and the second type of electromagnetic energy is a radio frequency (RF) alternating electromagnetic field. In optional step 130 the fibre network can be unpacked from the mould. Alternatively, the fibre network can also stay in the mould and the mould can thus be also part of the final water retaining structure and surround the fibre network. In a further optional step 140, the fibre network can be formed into granules or chips, e.g. by breaking.

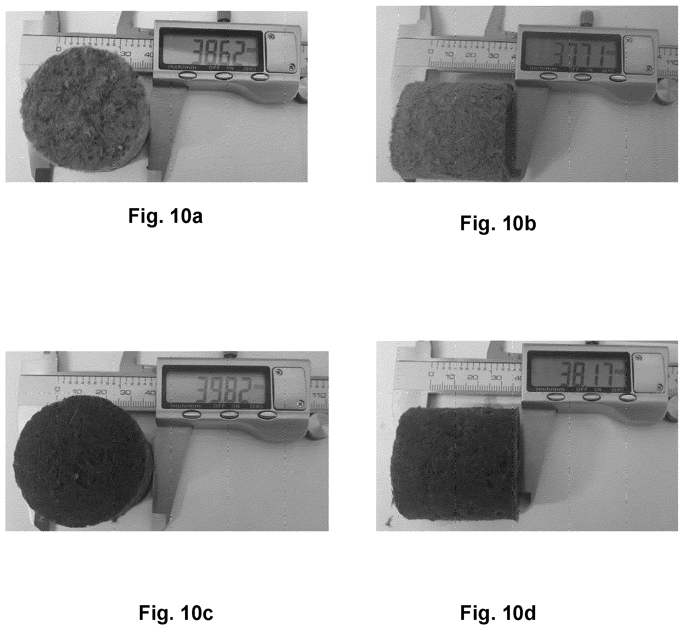

Fig. 10a to 10d show an example of a water retaining structure according to the first aspect of the invention before and after water soaking. The plant growth substrate, which in this example comprises vermicompost, is shown in dry state (Fig. 10a and 10b) and in wet state (Fig. 10c and 10d) and its length and diameter are measured in each stage. The plant growth substrate is dimensionally stable, and the diameter, length and volume changes are only slight.

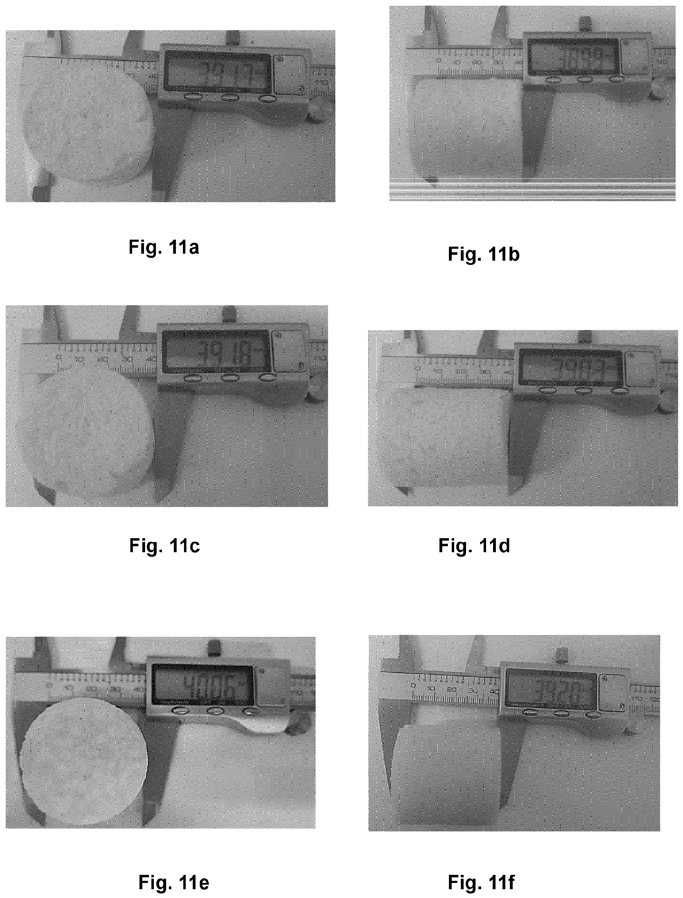

Fig. 11a to 11f show an example of a water retaining structure according to the first aspect of the invention before and after 1 min and after 24 h of water soaking. In Fig. 11a and 11b the water retaining structure is shown in dry state, in Fig. 11c and 11d the structure is shown after 1 min water soaking and in Fig. 11e and 11f the water retaining structure is shown after water soaking for 24 h.

Example 1 (plant growth substrate)

The product was prepared according to the following steps:

1. Chemi-Thermo Mechanical pulp of cellulose with an average length of 1.7 mm was suspended in water to reach a concentration of 10.8% by weight, and the fibres were allowed to swell overnight.

2. 550 g of swollen cellulose fibres, an additional 200 g of water, and the suspension of the natural wax in water at a concentration of 2 % w/w were mixed for 10 min using a high-speed mixer.

3. The mixture of non-ionic, amphoteric, and anionic surfactants such as coco glucoside, cocamidopropyl betaine, and sodium dodecyl sulfate in 13% w/w solutions was then added in the range of 4.5 ml to 7 ml and mixed until the foam density was in the range of 400-450 kg/m$^3$.

4. The foam was placed in 40 mm fi/h PEI moulds with ventilation holes distributed over the entire surface. The moulds were placed in a microwave dryer at 1850 W and dried for approximately 3 minutes.

Example 2 (water absorbent)

The product was prepared according to the following steps:

1. Chemi-Thermo Mechanical Pulp of cellulose with an average length of 1,7mm was suspended in water to achieve a concentration of 10,8%, and fibres were allowed for swelling overnight.

2. As a wet strength agent, 21% of water solution of polyamidoamine epichlorohydrin resin FennoStrength PA sizing agent was used, and as foam stabilizers, 2% wt of polyquaterium solution in water.

3. A 13% wt solution of the mixture of SLES and cocamide MEA and a solution of 15% wt of lauryl betaine were used as foaming agents.

4. 1100 g of 10.8% CTMP pulp, 6g of polyamidoamine epichlorohydrin resin solution, 80 g of MFC solution, 40g of polyquatanerium, and 200 ml of water were mixed using a high-speed mixer.

5. 3 ml of SLES/cocamide MEA solution and 5 ml of lauryl betaine solutions were added to the mixture and foamed to achieve 400 -450 kg/m$^3$ foam density.

6. 400 g of foam was placed in the PEEK cubic mould, 100x100 $\times$ 50 mm. Ventilation holes were uniformly distributed on the entire surface, with an open area ratio of 15%. Foam in mould was placed at 1850 W for 4 minutes.

Claims

1. Water retaining structure, preferably a water absorbent or a plant growth substrate, comprising a three-dimensional fibre network, the fibre network comprising cellulose and/or ligno-cellulose fibres, wherein the fibre network shows a hierarchical pore structure comprising macropores with a pore size > 500 $\mu$m, mesopores with a pore size in the range 20 to 500 $\mu$m, micropores with a pore size of 5 to 20 $\mu$m and Nanopores with a pore size < 5 $\mu$m.

2. Water retaining structure according to claim 1, having an overall porosity in a range of 80 to 98 % and/or an average density in the range from 50 to 140 kg/m$^3$ and/or having a water holding capacity WHC in the range from 40 to 95 %v/v, wherein the water holding capacity is the percentage of total volume occupied by water after excess water has been drained from the substrate.

3. Water retaining structure according to any of the previous claims further comprising at least one wet-strength additive preferably in a range of 0.1 to 5% by weight of the dry fibre mass, wherein the at least one wet-strength additive is in particular a glyoxal-based additive, carboxymethyl cellulose (CMC), nanocellulose (NC) or a polyelectrolyte, in particular a cationic starch, dialdehyde starch (DAS), a cationic biopolymer, polyacrylamide (PAM), polyvinylamine (PVAm) and/or wherein the water retaining structure additionally comprises a fabric, wherein the fabric is preferably a natural fabric and/or surrounds the fibre network and/or is arranged within the fibre network and/or wherein the water retaining structure is in a compressed state, having a density that is 1.5 to 10 times higher than the density of the uncompressed state and/or wherein the water retaining structure is present in form of granules or chip.

4. Water retaining structure according to any of the previous claims, wherein the water retaining structure is a plant growth substrate.

5. Plant growth substrate according to claim 4, wherein the plant growth substrate has at least one rooting area with a lower density than at least one mechanically stabilizing area, wherein preferably at least the rooting area has a density in the range from 30 to 80 kg/m$^3$ and the at least one mechanically stabilizing area has a density in the range from 80 to 200 kg/m$^3$, wherein preferably the mechanically stabilizing area is located at an outer shell of the plant growth substrate and/or wherein preferably at least one of the at least one rooting area is arranged either below or above at least one of the at least one mechanically stabilizing area of the plant growth substrate, wherein preferably the density increases from a minimum density at the at least one rooting area up to 400% of the minimum at the at least one mechanically stabilizing area as measured by a standardised method such as ASTM D3575 or ISO 845.

6. Plant growth substrate according to of any of claims 4 or 5, wherein at least parts of the surface of the fibre network are coated with at least one hydrophobic agent, preferably having a water holding capacity (WHC) in the range of 40 to 80 %, in particular wherein the at least one hydrophobic agent is a wax, preferably a natural wax, a plant-based oil and/or a bio-based, non-phytotoxic, hydrophobic biopolymer, wherein preferably the natural wax comprises at least one of carnauba wax, candelilla wax or beeswax, and/or the plant-based oil comprises at least one of coconut oil, castor oil or soybean oil and/or the bio-based, non-phytotoxic, hydrophobic biopolymer comprises at least one of polylactic acid (PLA), a polyhydroxyalkanoate (PHA), or a starch-based polymer.

7. Plant growth substrate according to any of claims 4 to 6 further comprising decomposed organic matter, preferably humus and/or vermicompost, in particular, wherein the plant growth substrate comprises decomposed organic matter in a range of 10 to 45 % of dry mass and/or wherein the plant growth substrate further comprises at least one of fertilizer or fertilizer in encapsulated form or substrate improver, further preferred at least one of encapsulated mineral fertilizer or humic substances (including humic acid, fulvic acid, humin and hymatomelanic acid) or compost or zeolite or biochar or leonardite and/or wherein the plant growth substrate shows a prefabricated hole preferably in the centre of a cross-cut or is in form of granules or chips.

8. A method for the preparation of a water retaining structure, especially a water absorbent or a plant growth substrate, comprising a three-dimensional fibre network, the method comprising the following steps:

   a. foaming cellulose and/or ligno-cellulose fibres having a length to diameter aspect ratio of 50 to 200 in an aqueous solution to obtain a foamed aqueous solution;
   b. providing the foamed aqueous solution obtained in step a) into a mould in an oven;
   c. forming a three-dimensional fibre network product by providing electromagnetic energy to the foamed aqueous solution obtained in step a), wherein the electromagnetic energy is preferably applied with a power density of 1 to 25 kW/kg, more preferred 3 to 10 kW/kg for 2 to 30 minutes.

9. The method, according to claim 8, wherein the mould is a closed mould that completely encloses the substrate mixture or wherein the mould is an open mould with one or more open sides and/or wherein the foamed aqueous solution is subjected to a pressure in the range of 0.001 to 10 MPa during being placed into the mould.

10. The method according to any of claims 8 to 9, wherein in step c) a first form of electromagnetic radiation and at least a second form of electromagnetic radiation different from the first form of electromagnetic radiation are applied subsequently to the same cellulose and/or ligno-cellulose fibres.

11. The method according to claim 10, wherein the first form of electromagnetic radiation is microwave electromagnetic radiation, and the second form of electromagnetic radiation is a radio frequency (RF or radio waves) electromagnetic radiation and/or wherein the first form of electromagnetic radiation is configured to warm up the material and force part of water out to go into the drain, and wherein the second form of electromagnetic radiation is configured to obtain substantially uniform fibrous bonded structures by drying fully down to preferably 0% moisture content and/or wherein the second form of electromagnetic radiation is applied until the material is dried down to a moisture content in the range from 0 to 30% and/or wherein the first form of electromagnetic radiation is applied not longer than until a local temperature of at least some part of the material exceeds a predefined threshold.

12. The method according to any of claims 8 to 11, wherein before the foaming in step a) decomposed organic matter and/or at least one additive and/or at least one surfactant is added to the aqueous solution, in particular wherein the at least one additive is a wet strength additive and/or a fertilizer like compost, zeolite or biocarbon and wherein the at least one surfactant is an amphoteric or anionic surfactant, preferably Sodium Lauryl Ether Sulfate (SLES), Sodium Dodecyl Sulfate (SDS), Coconut Betaine and/or SLS (Sodium Lauroyl Sarcosinate), wherein the at least one surfactant is preferably added in a dose of 0.1 to 2 wt% and/or wherein the mould comprises a plurality of pores, each having a pore size of 0.3 to 2 mm and/or wherein the pores have funnel shape having wider opening toward outside of the mould and/or wherein the mould comprises a material transparent for electromagnetic radiation, preferably cotton, jute or polypropylene and/or wherein the mould comprises at least one fabric, the at least one fabric being preferably a nonwoven fabric, more preferred comprising polypropylene (PP), polyhydroxyalkanoates or natural fibres and/or wherein the mould has a total opening area in the range of 1 to 50%.

13. The method according to any of claims 8 to 12, wherein the foam is packed unidirectionally into the mould, such as from one end of the mould to the other and/or wherein a surface share of the pores of the mould with regard to the surface encapsulating the volume within the mould is small such that internal pressure can build up, wherein for an internal mould volume of up to 1 litre the surface share of the pores is between 4% and 12%.

14. The method according to any of claims 8 to 13 comprising at least one hydrophobization step, preferably before step a), after which at least parts of the surface of the fibres of the fibre network are hydrophobic, wherein at least one hydrophobization step comprises preferably coating at least partially coating a surface of the fibre network with at least one hydrophobic agent, preferably wherein the hydrophobic agent is added in a range of 1 - 10 % by weight of the dry fibre mass, wherein the hydrophobic agent is preferably a wax, more preferred a natural wax, a plant-based oil and/or a bio-based, non-phytotoxic, hydrophobic biopolymer.

15. Water retaining structure, especially water absorber or plant growth substrate, produced according to the method of any of claims 8 to 14.

Fig. 1a

Fig. 1b

Fig. 1c

Fig. 1d

**Fig. 2**

**Fig. 3**

**Fig. 4a**            **Fig. 4b**

**Fig. 4c**            **Fig. 4d**

**Fig. 5a**

**Fig. 5b**

**Fig. 6a**

**Fig. 6b**

**Fig. 7a**

**Fig. 7b**

**Fig. 8a**

**Fig. 8b**

Fig. 9

Fig. 10a

Fig. 10b

Fig. 10c

Fig. 10d

Fig. 11a

Fig. 11b

Fig. 11c

Fig. 11d

Fig. 11e

Fig. 11f

Europäisches
Patentamt

European
Patent Office

Office européen
des brevets

# EUROPEAN SEARCH REPORT

**Application Number**

EP 24 20 5392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 036 307 A1 (ORGANIC DISPOSABLES SP Z O O [PL]) 3 August 2022 (2022-08-03) * the whole document * ----- | 8-15 | INV. A01G24/35 A01G24/40 A01G24/27 |
| X | US 2022/022390 A1 (NORDEN DANIEL SCOTT [US] ET AL) 27 January 2022 (2022-01-27) * paragraphs [0002], [0004], [0027], [0031], [0037], [0042], [0069] - [0072]; claim 1; figure 9; table 1 * ----- | 1-7 | A01G24/44 |

**TECHNICAL FIELDS SEARCHED (IPC)**

A01G

The present search report has been drawn up for all claims

| Place of search | Date of completion of the search | Examiner |
|---|---|---|
| The Hague | 13 March 2025 | Weinmüller, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 5392

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | | Publication date | Patent family member(s) | | Publication date |
|---|---|---|---|---|---|
| EP 4036307 | A1 | 03-08-2022 | EP | 4036306 A1 | 03-08-2022 |
| | | | EP | 4036307 A1 | 03-08-2022 |
| | | | EP | 4435179 A2 | 25-09-2024 |
| | | | ES | 2992350 T3 | 11-12-2024 |
| | | | PL | 4036307 T3 | 18-11-2024 |
| US 2022022390 | A1 | 27-01-2022 | AU | 2021266771 A1 | 08-12-2022 |
| | | | BR | 112022022502 A2 | 10-01-2023 |
| | | | CA | 3177810 A1 | 11-11-2021 |
| | | | CN | 115605080 A | 13-01-2023 |
| | | | EP | 4145985 A1 | 15-03-2023 |
| | | | JP | 2023528750 A | 06-07-2023 |
| | | | KR | 20230010214 A | 18-01-2023 |
| | | | US | 2022022390 A1 | 27-01-2022 |
| | | | WO | 2021226435 A1 | 11-11-2021 |

EPO FORM P0459

For more details about this annex : see Official Journal of the European Patent Office, No. 12/82